# EUROPÄISCHE PATENTSCHRIFT

(11) **EP 0 383 119 B1**
(45) Veröffentlichungstag und Bekanntmachung des Hinweises auf die Patenterteilung: **05.04.1995**
(21) Anmeldenummer: 90102141.0
(22) Anmeldetag: 03.02.1990
(51) Int. Cl.: C08G 75/02

(54) **Statistische oder alternierende schwefelhaltige Copolymere, ein Verfahren zu ihrer Herstellung und ihre Verwendung**
Statistic or alternating sulfur-containing copolymers, a process for their preparation and their use
Copolymères statistiques ou alternés contenant du soufre, procédé pour leur préparation et leur utilisation

(30) Priorität: 16.02.1989 DE 3904706
(43) Veröffentlichungstag der Anmeldung: 22.08.1990
(73) Patentinhaber: BAYER AG, 51368 Leverkusen (DE)
(72) Erfinder: Dorf, Ernst-Ulrich, Dr., D-4150 Krefeld 1 (DE); Reinking, Klaus, Dr., D-5632 Wermelskirchen 1 (DE); Jakob, Wolfgang, Dipl.-Ing., D-4130 Moers 1 (DE); Tresper, Erhard, Dr., D-4150 Krefeld 11 (DE); Rüsseler, Wolfgang, Dr., D-4150 Krefeld (DE)

(56) Entgegenhaltungen:
- EP-A- 0 223 099
- JP-A- 6 248 727
- PATENT ABSTRACTS OF JAPAN, Band 11, Nr. 242 (V-248)(2689), 7. August 1987 ; % JP-A-6248727
- MACROMOLECULES, Band 15, Nr. 2, März-April 1982, Seiten 248-251, Washington, USA ; M. UEDA et al. : "Synthesis of Poly(aliphatic sulfides) by Polycondensation of sodium Sulfide with Dibromoalkanes in the Presence of Quaternary Onium Salts"

## Beschreibung

Die Erfindung betrifft neue schwefelhaltige Copolymere, ein Verfahren zu ihrer Herstellung aus einer Schwefelquelle und einer Mischung aus Dihalogenaromaten und Dihalogenaliphaten und ihre Verwendung zur Herstellung geformter Körper.

Polyphenylensulfide (PPS) sind beispielsweise aus der US-A 3 354 129, der EP-A 171 021 bekannt. Sie sind aufgrund ihrer thermischen und mechanischen Eigenschaften sowie ihrer guten chemischen Beständigkeit wertvolle Rohstoffe zur Herstellung von Fasern, Folien und Formkörpern. Sie finden insbesondere Anwendung im Elektro- und Elektroniksektor. Sie sind flammfest und dimensionsstabil und haben eine hohe Dauertemperaturbeständigkeit sowie gute elektrische Eigenschaften. Die Kriechstromfestigkeit ist aber z.B. gegenüber Polyamid 6, Polyalkylenterphthalat oder Polystyrol geringer. Die Anwendung von PPS im Hochspannungsbereich ist nur beschränkt möglich.

Es ist bekannt, z.B. die Kriechstromfestigkeit von Polyarylensulfiden (PAS) durch Zusätze von Calciumsulfat zu verbessern (z.B. EP-A 87 145). Die Menge an Calciumsulfat, die hierzu nötig ist, beeinträchtigt jedoch die mechanischen Eigenschaften der aus dem so modifizierten PPS hergestellten Formkörper.

Aus der JP-A 62 048 727 ist bekannt, durch Umsetzung von Dichloraromaten und Dichloraliphaten mit einer Schwefelquelle ein Verschließen von Natriummercaptid-Gruppen am Ende der PAS-Kette bei gleichzeitiger Erhöhung der Kristallisationsgeschwindigkeit des Polymeren zu erzielen. Es wird ausdrücklich daraufhin gewiesen, daß die eingesetzten Halogenaliphaten unter den gewählten Reaktionsbedingungen keine (Co-)Polymerisation eingehen, "da übermäßig große Mengen (an Halogenaliphaten) die Bildung der Polyarylensulfidketten stören würde". Es tritt Endgruppenverkappung auf.

Es ist daher die Aufgabe der Erfindung, Polymere zu entwickeln, deren elektrische Eigenschaften, z.B. die Kriechstromfestigkeit, gegenüber dem PPS verbessert sind, die aber trotzdem dessen vorteilhafte mechanische und thermische Eigenschaften aufweisen.

Es wurde nun gefunden, daß neue schwefelhaltige Copolymere aus aromatischen und aliphatischen Einheiten eine deutlich bessere Kriechstromfestigkeit aufweisen als PAS. Die erfindungsgemäßen Produkte haben nahezu gleiche mechanische Eigenschaften wie PPS und lassen sich unter den gleichen Bedingungen verarbeiten.

Gegenstand der Erfindung sind neue, gegebenenfalls verzweigte, statistische oder alternierende schwefelhaltige Copolymere, enthaltend
a) 60 bis 99,5 Mol-%, vorzugsweise 75 bis 99 Mol-%, gleiche oder verschiedene Arylensulfideinheiten der Formel (I)

   -Ar-S- (I),

   in der
   - Ar: für einen Rest der Formeln (II) bis (IV) steht, 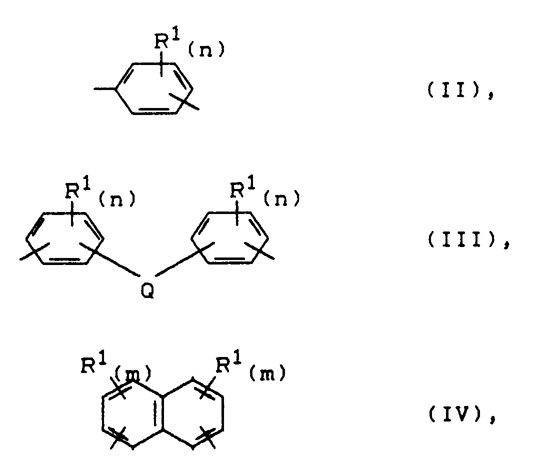
   in denen
   - R¹: gleich oder verschieden ist und Wasserstoff, C₁-C₄-Alkyl, C₅-C₁₀-Cycloalkyl, C₆-C₁₀-Aryl, C₇-C₁₄-Alkylaryl, C₇-C₁₄-Arylalkyl sein kann, wobei zwei zueinander orthoständige Reste R¹ unter Einbeziehung der benachbarten C-Atome im Ring zu einem C₅-C₁₄-aromatischen oder bis zu drei Heteroatome wie N, O, S enthaltenden heterocyclischen Ring verknüpft sein können, und
   - Q: für eine Einfachbindung oder eine Gruppe wie -CR¹₂-, -C(O)-, -S(O)-, S(O)₂, -NR¹-, -C(O)O-, -C(O)NR¹-, (-C(O))₂N-, -C(O)NR¹-Ar- NR¹C(O)- und -C(O)-Ar-C(O)-steht, wobei R¹ und Ar die obengenannte Bedeutung haben, und
   - n: für die Zahl 1, 2, 3 oder 4 steht,
   - m: für die Zahl 1, 2 oder 3 steht, und
b) 0,5 bis 40 Mol-%, vorzugsweise 1 bis 25 Mol-%, gleiche oder verschiedene gegebenenfalls verzweigte C₁-C_{∞}-Alkylensulfid-Einheiten, bevorzugt C₂-C_{∞}-Alkylensulfid-Einheiten, besonders bevorzugt C₆-C₃₆-Alkylensulfid-Einheiten.

Die Abfolge der Einheiten a) und b) in den erfindungsgemäßen aromatisch-aliphatischen Polymeren ist statistisch oder alternierend.

Gegenstand der Erfindung ist ein Verfahren zur Herstellung der erfindungsgemäßen statistischen oder alternierenden schwefelhaltigen Copolymeren, dadurch gekennzeichnet, daß
a) 60 bs 99,5 Mol-%, vorzugsweise 75 bis 99 Mol-%, bezogen auf die Summe aus a) und b) gleiche oder verschiedene Dihalogen-(hetero)aromaten, vorzugsweise Dihalogenaromaten der Formeln (V), (VI) und/oder (VII) 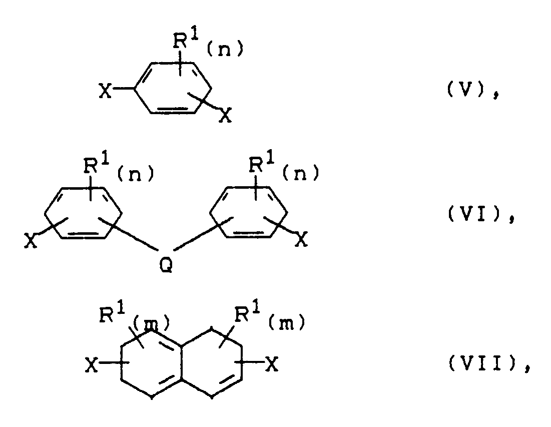 in denen
   - X: Halogen wie Chlor oder Brom bedeutet,
   - R¹: gleich oder verschieden ist und Wasserstoff, C₁-C₄-Alkyl, C₅-C₁₀-Cycloalkyl, C₆-C₁₀-Aryl, C₇-C₁₄-Alkylaryl, C₇-C₁₄-Arylalkyl sein kann, wobei zwei zueinander orthoständige Reste R¹ unter Einbeziehung der benachbarten C-Atome im Ring zu einem C₅-C₁₄-aromatischen oder bis zu drei Heteroatome wie N, O, S enthaltenden heterocyclischen Ring verknüpft sein können, und
   - Q: für eine Einfachbindung oder eine Gruppe wie -CR¹₂-, -C(O)-, -S(O)-, -SO₂-, -NR¹-, -C(O)O-, -C(O)NR¹-, (-C(O))₂N-, -C(O)NR¹-C(O)-und -C(O)-Ar-C(O)- steht, wobei R¹ die oben genannte Bedeutung hat, und
   - n: für die Zahl 1, 2, 3 oder 4 steht und
   - m: für die Zahl 1, 2 oder 3 steht, und
b) 0,5 bis 40 Mol-%, vorzugsweise 1 bis 25 Mol-%, bezogen auf die Summe aus (a+b) gleiche oder verschiedene, gegebenenfalls verzweigte, C₁-C_{∞}-Dihalogenaliphaten, bevorzugt C₂-C_{∞}-Dihalogenaliphaten, besonders bevorzugt C₆-C₃₆-Dihalogenaliphaten,
c) gegebenenfalls 0,05 bis 3 Mol-% auf die Summe (a + b) Tri- oder Tetrahalogenaromaten der Formel (VIII)

   ArXₙ (VIII),

   in der
   - X: für Halogen wie Chlor oder Brom steht,
   - Ar: für einen C₆-C₂₄-Aromaten oder Heteroaromaten steht und
   - n: für die Zahl 3 oder 4 steht,
   und/oder
   gegebenenfalls 0,05 bis 7,5 Mol-% bezogen auf die Summe (a+b) Verbindungen zur Regelung des Molekulargewichtes, vorzugsweise Monohalogen- oder Monohydroxiaromaten der Formel (IX)

   Ar¹-Y (IX),

   in der
   - Y: für Hydroxy, Alkaloxy oder Halogen wie Chlor oder Brom steht und
   - Ar¹: für einen C₆-C₂₄-Aromaten oder- Heteroaromaten steht, oder über eine Einheit Q, die die bei den Formeln (IV) und (V) angegebene Bedeutung hat, mit weiteren C₆-C₂₄-Aromaten substiutiert sein kann, und
d) Alkalisulfiden, bevorzugt Natrium- oder Kaliumsulfid oder deren Mischung, zusammen mit Alkalihydrogensulfiden, bevorzugt Natrium- oder Kaliumhydrogensulfid oder deren Mischung, gegebenenfalls in Form ihrer Hydrate oder wäßrigen Mischungen, gegebenenfalls zusammen mit Katalysatoren oder anderen Hilfsstoffen in
d) einem polaren, aprotischen organischen Lösungsmittel,
miteinander bei einer Temperatur von 180 bis 350°C gegebenenfalls bei einem Druck bis zu 10³ bar umgesetzt werden, wobei die Zugabe des/der Dihalogenaliphaten erst nach Ende der vollständigen Entwässerung des Reaktionssystems erfolgt.

Gegenstand der Erfindung ist die Verwendung der neuen schwefelhaltigen Copolymeren, gegebenenfalls in Mischung mit üblichen Füll-, Verstärkungs- und Hilfsstoffen und/oder anderen Polymeren zur Herstellung geformter Körper.

Beispiele für erfindungsgemäß einsetzbare Dihalogenaromaten sind 1,4-Dichlorbenzol, 1,4-Bromchlorbenzol, 1,4-Dibrombenzol, 1,3-Dichlorbenzol, 1,3-Dichlorbenzol, 4,4′-Dichlordiphenyl, 4,4′-Dibromdiphenyl, 2,4′-Dichlordiphenyl, 4,4′-Dichlordiphenylsulfid, 4,4′-Dichlordiphenylsulfon, 4,4′-Dichlorbenzophenon, 2,4′-Dichlortoluol, 2,5-Dichlortoluol.

Beispiele für aliphatische Chlor- und Bromverbindungen wie erfindungsgemäß einsetzbare Dihalogenaliphaten sind 1,2-Dichlorethan, 1,2-Dichlorpropan, 1,3-Dichlorpropan, 1,3-Dichlorbutan, 2,3-Dichlorbutan, 1,4-Dichlorbutan, 1,2-Dichlor-2-methylpropan, 1,3-Dichlor-2,2-dimethylpropan, 1,5-Dichlorpentan, 1,6-Dichlorhexan, 1,7-Dichlorheptan, 1,8-Dichloroctan, 1,9-Dichlornonan, 1,10-Dichlordecan, 1,11-Dichlorundecan, 1,12-Dichlordodecan, hohere Dichlorparaffine, gesättigte Polymerisate wie Polyethylen, Polypropylen, Polyisobutylen mit Chlorendgruppen.

Beispiele für gegebenenfalls einsetzbare Verzweiger der Formel (VI) sind 1,2,4-Trichlorbenzol, 1,3,5-Trichlorbenzol, 1,3,5-Tribrombenzol, 1,3,5-Tris(4-chlorphenyl)benzol, 1,3,5-Tris(4-bromphenyl)benzol, 2,2′,4,4′-Tetrachlordiphenyl, 2,2′,4,4′-Tetrachlordiphenylsulfid.

Beispiele für gegebenenfalls einsetzbare Molekulargewichtsregler der Formel (VII) sind Phenol, Alkaliphenolat, Brombenzol, 4-Chlordiphenyl, 4-Chlordiphenylsulfon, 4-Chlordiphenylsulfid, 1-Chlornaphthalin, 2-Chlornaphthalin.

Beispiele für polare aprotische Lösungsmittel sind Amide wie Hexamethylphosphorsäuretriamid, N,N-Dimethylformamid, Sulfone wie Diphenylsulfon, Lactame wie N-Methylpyrrolidon, N-Methylcaprolactam, Heterocyclen wie N,N′-Dimethylimidazolidinon.

Geformte Körper im Sinne der Erfindung sind Extrudate wie Fasern, Folien, Rohre, Profile und spritzgegossene Formteile, die nach Standardverfahren erhalten wurden.

Die erfindungsgemäßen Polymeren können gegebenenfalls mit üblichen Füll- und Verstärkungsstoffe, (Modern Plastics Encylopedia 1988, Vol. 64, No. 10A, S. 183-194) üblichen Hilfsmitteln (loc. cit, S. 127-178) in üblichen Mengen (bis etwa 300 Gew.-%) abgemischt werden.

Die geformten Körper können weiterhin gegebenenfalls andere Polymere wie unmodifizierte Polyarylensulfide, Polykondensate, Polyaddate, Polymerisate etc. enthalten.

Die erfindungsgemäßen Copolymere und die aus ihnen hergestellten geformten Körper eignen sich besonders für Anwendungen im Elektro- und Elektronikbereich, in denen neben hoher Temperatur- und Chemikalienbeständigkeit und Flammfestigkeit eine hohe Kriechstromfestigkeit gefordert ist.

### Beispiel 1

### Herstellung von Polyphenylensulfid als Vergleichsmaterial

In einem 5 l Reaktionskessel, der mit einem Thermometer, Rührer, kühlbarer Kolonne, Destillatteiler, Rückflußkühler und zwei Tropftrichtern ausgerüstet ist, werden unter Stickstoff 2700 g N-Methylcaprolactam und 611,5 g 1,4-Dichlorbenzol vorgelegt und zum Rückfluß erwärmt. Dazu wird eine Lösung von 1147,5 g Natriumsulfidhydrat (ca. 60 % Natriumsulfid), 4,4 g Natriumhydroxid und 141,1 g Caprolactam so zugetropft, daß das zugeführte Wasser gleichzeitig azeotrop mit 1,4-Dichlorbenzol abgeführt werden kann. Gleichzeitig werden weitere 611,5 g 1,4-Dichlorbenzol zur Reaktionsmischung zugegeben. Zur Erhaltung der Stöchiometrie wird abdestillierendes 1,4-Dichlorbenzol nach Abtrennung des Wassers wieder in den Ansatz zurückgeführt. Nach beendeter Zugabe und beendeter Entwässerung wird die Kolonne auf Rückfluß gestellt, der Ansatz weitere 10 Stunden zum Rückfluß erhitzt und das Produkt anschließend in üblicher Weise isoliert.

### Beispiel 2

Durchführung wie Beispiel 1, jedoch wurden insgesamt 1198,6 g 1,4-Dichlorbenzol zugegeben und nach Ende der Entwässerung 25,8 g 1,6-Dichlorhexan hinzugefügt. (Ausbeute = 820,3 g =̂ 91 %).

### Beispiel 3

Durchführung wie Beispiel 1, jedoch wurden insgesamt 1100,8 g 1,4-Dichlorbenzol zugegeben und nach Ende der Entwässerung 129,0 g 1,6-Dichlorhexan hinzugefügt. (Ausbeute = 780,0 g =̂ 86 %).

### Beispiel 4

26,1 g 1,6-Dichlorhexan, 98,8 g 1,4-Dichlorbenzol und 89,9 g eines vorentwässerten Natriumsulfids (bestehend aus 67,8 % Na₂S, 7,6 % NaHS und 24,6 % Natriumaminocapronat) werden in 276 g N-Methylcaprolactam vorgelegt, langsam auf Rückfluß geheizt und dort 12 Stunden gehalten.

Anschließend wird in 4 l Isopropanol gefällt und filtriert. Das Produkt wird in Wasser angemaischt, angesäuert, filtriert, elektrolytfrei gewaschen und im Vakuum bei 100°C getrocknet. Man erhält 73,3 g (=̂ 80 %) eines weißen Pulvers.

### Beispiele 5 bis 7

Herstellung von Formmassen aus den Polymeren der Beispiele 1 bis 3. Weitere Komponenten:
- GF:: geschlichtete 6 mm Glasfaser mit einem Faserdurchmesser von ca. 10 »m
- T:: Talkum, Teilchendurchmesser: 50 % < 3 »m

| Bsp. | Polymer | % Polymer | % GF | %T |
|---|---|---|---|---|
| 5 | Bsp. 1 | 40 | 30 | 30 |
| 6 | Bsp. 2 | 40 | 30 | 30 |
| 7 | Bsp. 3 | 40 | 30 | 30 |

Die Formmassen wurden durch Mischen und Homogenisieren der Komponenten in der Schmelze bei ca. 300 bis 320°C Massetemperatur auf einer Zweiwellenschnecke ZSK 32 (Werner & Pfleiderer) hergestellt. Das getrocknete Stranggranulat wurde auf üblichen Spritzgußmaschinen zu Normprüfkorpern verarbeitet, die nach DIN- und ASTM-Normen geprüft werden.

| Bsp. | σ_{bB} in MPa (DIN 53452) Zugspannung bei Bruch | aₙ in kJ/m² (ISO 180) Schlagzähigkeit | CTI in V (IEC 112) Kriechstromfestigkeit |
|---|---|---|---|
| 5 | 188 | 15 | 125 |
| 6 | 193 | 17 | 200 |
| 7 | 185 | 15 | 275 |

## Patentansprüche

1. Gegebenenfalls verzweigte, statistische oder alternierende schwefelhaltige Copolymere, enthaltend
a) 60 bis 99,5 Mol.-% gleiche oder verschiedene Arylensulfideinheiten der Formel (I)
-Ar-S- (I),
in der
Ar für einen Rest der Formeln (II) bis (IV) steht, 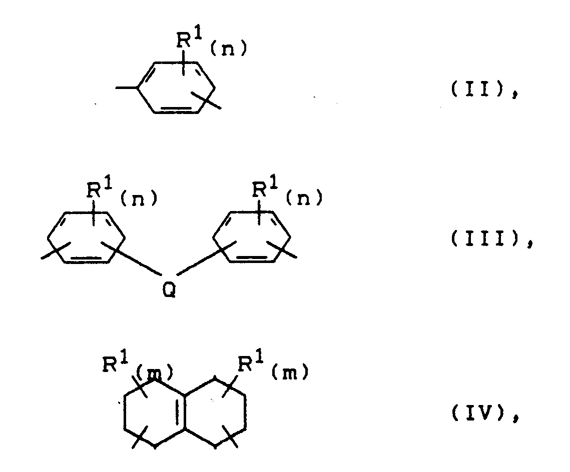
in denen
R¹ gleich oder verschieden ist und Wasserstoff, C₁-C₄-Alkyl, C₅-C₁₀-Cycloalkyl, C₆-C₁₀-Aryl, C₇-C₁₄-Alkylaryl, C₇-C₁₄-Arylalkyl sein kann, wobei zwei zueinander orthoständige Reste R¹ unter Einbeziehung der benachbarten C-Atome im Ring zu einem C₅-C₁₄-aromatischen oder bis zu drei Heteroatome wie N, O, S enthaltenden heterocyclischen Ring verknüpft sein können, und
Q für eine Einfachbindung oder eine Gruppe wie -CR¹₂-, -C(O)-, -S(O)-, -S(O)₂-, -NR¹-, -C(O)O-, -C(O)NR¹-, (-C(O))₂N-, -C(O)NR¹-Ar-NR¹C(O)- und -C(O)-Ar-C(O)-steht, wobei R¹ und Ar die oben genannte Bedeutung haben, und
n für die Zahl 1, 2, 3 oder 4 steht,
m für die Zahl 1, 2 oder 3 steht, und
b) 0,5 bis 40 Mol-%, vorzugsweise 1 bis 25 Mol-%, gleiche oder verschiedene gegebenenfalls verzweigte C₁-C_{∞}-Alkylensulfid-Einheiten, bevorzugt C₂-C_{∞}-Alkylensulfid-Einheiten, besonders bevorzugt C₆-C₃₆-Alkylensulfid-Einheiten.

2. Verfahren zur Herstellung statistischer oder alternierender schwefelhaltiger Copolymere des Anspruchs 1 dadurch gekennzeichnet, daß
a) 60 bs 99,5 Mol-%, vorzugsweise 75 bis 99 Mol-%, bezogen auf die Summe aus a) und b) gleiche oder verschiedene Dihalogen-(hetero)aromaten, vorzugsweise Dihalogenaromaten der Formeln (V), (VI) und/oder (VII) 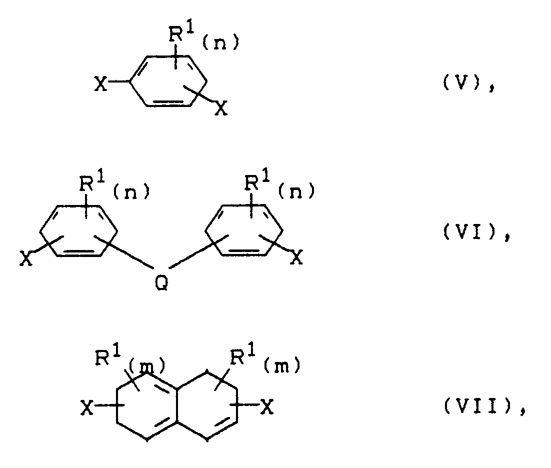 in denen
X Halogen wie Chlor oder Brom bedeutet,
R¹ gleich oder verschieden ist und Wasserstoff, C₁-C₄-Alkyl, C₅-C₁₀-Cycloalkyl, C₆-C₁₀-Aryl, C₇-C₁₄-Alkylaryl, C₇-C₁₄-Arylalkyl sein kann, wobei zwei zueinander orthoständige Reste R¹ unter Einbeziehung der benachbarten C-Atome im Ring zu einem C₅-C₁₄-aromatischen oder bis zu drei Heteroatome wie N, O, S enthaltenden heterocyclischen Ring verknüpft sein können, und
Q für eine Einfachbindung oder eine Gruppe wie -CR¹₂-, -C(O)-, -S(O)-, -SO₂-, -NR¹-, -C(O)O-, -C(O)NR¹-, (-C(O))₂N-, -C(O)NR¹-C(O)-und -C(O)-Ar-C(O)- steht, wobei R¹ die obengenannte Bedeutung hat, und
n für die Zahl 1, 2, 3 oder 4 steht,
m für die Zahl 1, 2 oder 3 steht, und
b) 0,5 bis 40 Mol-%, vorzugsweise 1 bis 25 Mol-%, bezogen auf die Summe aus (a+b) gleiche oder verschiedene, gegebenenfalls verzweigte, C₁-C_{∞}-Dihalogenaliphaten, bevorzugt C₂-C_{∞}-Dihalogenaliphaten, besonders bevorzugt C₆-C₃₆-Dihalogenaliphaten,
c) gegebenenfalls 0,05 bis 3 Mol-% auf die Summe (a + b) Tri- oder Tetrahalogenaromaten der Formel (VIII)
ArXₙ (VIII),
in der
X für Halogen wie Chlor oder Brom steht,
Ar für einen C₆-C₂₄-Aromaten oder Heteroaromaten steht und
n für die Zahl 3 oder 4 steht, und
und/oder
gegebenenfalls 0,05 bis 7,5 Mol-% bezogen auf die Summe (a+b) Verbindungen zur Regelung des Molekulargewichtes, vorzugsweise Monohalogen- oder Monohydroxiaromaten der Formel (IX)
Ar¹-Y (IX),
in der
Y für Hydroxy, Alkaloxy oder Halogen wie Chlor oder Brom steht und
Ar¹ für einen C₆-C₂₄-Aromaten oder -Heteroaromaten steht, oder über eine Einheit wie Q die die beiden Formeln (IV) und (V) angegebene Bedeutung hat mit weiteren Aromaten substiutiert sein kann, und
d) Alkalisulfiden, bevorzugt Natrium- oder Kaliumsulfid oder deren Mischung, zusammen mit Alkalihydrogensulfiden, bevorzugt Natrium- oder Kaliumhydrogensulfid oder deren Mischung, gegebenenfalls in Form ihrer Hydrate oder wäßrigen Mischungen, gegebenenfalls zusammen mit Katalysatoren oder anderen Hilfsstoffen in
d) einem polaren, aprotischen organischen Lösungsmittel,
miteinander bei einer Temperatur von 180-350°C, gegebenenfalls bei einem Druck bis zu 10³ bar umgesetzt werden, wobei die Zugabe des/der Dihalogenaliphaten erst nach Ende der vollständigen Entwässerung des Reaktionssystems erfolgt.

3. Verwendung der schwefelhaltigen Copolymeren gemäß Anspruch 1, gegebenenfalls in Kombination mit üblichen Füll-, Verstärkungs- und Hilfsstoffen und/oder anderen Polymeren zur Herstellung geformter Körper.

## Claims

1. Optionally branched, statistical or alternating sulphur-containing copolymers containing
a) from 60 to 99.5 mol-% of identical or different arylene sulphide units of the formula (I)
-Ar-S- (I),
wherein
Ar represents a radical of the formulae (II) to (IV), 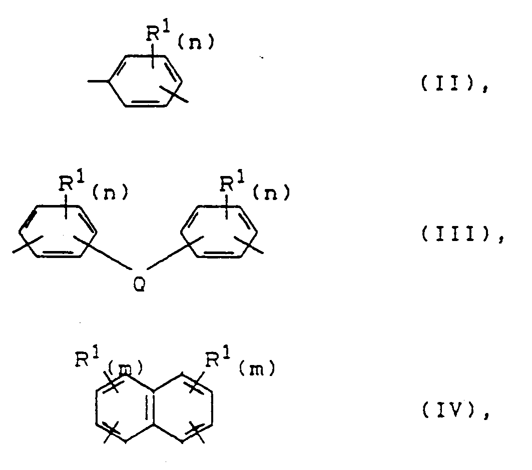 wherein
R¹ is identical or different and can be hydrogen, C₁-C₄ alkyl, C₅-C₁₀ cycloalkyl, C₆-C₁₀ aryl, C₇-C₁₄ alkylaryl, C₇-C₁₄ arylalkyl, wherein two R¹ radicals situated in the ortho position to one another including the adjacent C atoms in the ring can be bonded to a C₅-C₁₄ aromatic ring or to a heterocyclic ring containing up to three hetero atoms such as N, O or S, and
Q represents a single bond or a group such as -CR¹₂-, -C(O)-, -S(O)-, -S(O)₂-, -NR¹-, -C(O)O-, -C(O)NR¹-, (-C(O))₂N-, -C(O)NR¹-Ar-NR¹C(O)- and -C(O)-Ar-C(O)-, wherein R¹ and Ar have the meaning given above, and
n represents the number 1, 2, 3 or 4,
m represents the number 1, 2 or 3 and
b) from 0.5 to 40 mol-%, preferably 1 to 25 mol-%, of identical or different optionally branched C₁-C_{∞} alkylene sulphide units, preferred C₂-C_{∞} alkylene sulphide units, particularly preferred C₆-C₃₆ alkylene sulphide units.

2. Process for the preparation of statistical or alternating sulphur-containing copolymers according to claim 1, characterised in that
a) from 60 to 99.5 mol-%, preferably 75 to 99 mol-%, referred to the sum of a) and b) of identical or different dihalo(hetero)aromatic compounds, preferably dihaloaromatic compounds of the formulae (V), (VI) and/or (VII) 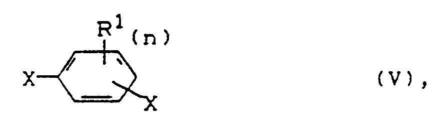 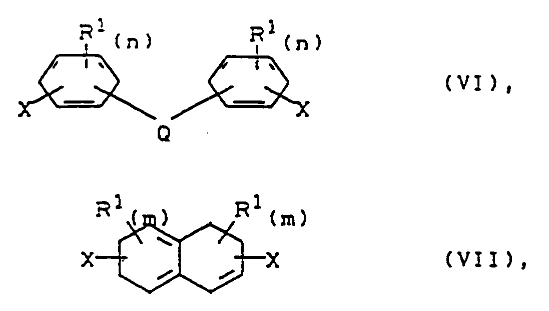 wherein
X signifies a halogen such as chlorine or bromine,
R¹ is identical or different and and can be hydrogen, C₁-C₄ alkyl, C₅-C₁₀ cycloalkyl, C₆-C₁₀ aryl, C₇-C₁₄ alkylaryl, C₇-C₁₄ arylalkyl, wherein two R¹ radicals situated in the ortho position to one another including the adjacent C atoms in the ring can be bonded to a C₅-C₁₄ aromatic ring or to a heterocyclic ring containing up to three hetero atoms such as N, O or S, and
Q represents a single bond or a group such as -CR¹₂-, -C(O)-, -S(O)-, -SO₂-, -NR¹-, -C(O)O-, -C(O)NR¹-, (-C(O))₂N-, -C(O)NR¹-Ar-NR¹C(O)- and -C(O)-Ar-C(O)-, wherein R¹ has the meaning given above, and
n represents the number 1, 2, 3 or 4,
m represents the number 1, 2 or 3 and
b) from 0.5 to 40 mol-%, preferably 1 to 25 mol-%, referred to the sum of (a+b) of identical or different, optionally branched C₁-C_{∞} dihaloaliphatic compounds, preferred C₂-C_{∞} dihaloaliphatic compounds, particularly preferred C₆-C₃₆ dihaloaliphatic compounds,
c) optionally from 0.05 to 3 mol-% of the sum (a+b) of tri- or tetrahaloaromatic compounds of the formula (VIII)
ArXₙ (VIII),
wherein
X signifies a halogen such as chlorine or bromine,
Ar represents a C₆-C₂₄ aromatic compound or heteroaromatic compound and
n represents the number 3 or 4, and
and/or
optionally from 0.05 to 7.5 mol-%, referred to the sum (a+b) of compounds for adjusting the molecular weight, preferably monohaloaromatic compounds or monohydroxyaromatic compounds of the formula (IX)
Ar¹-Y (IX),
wherein
Y represents hydroxy, alkaloxy or halogen such as chlorine or bromine and
Ar¹ represents a C₆-C₂₄ aromatic compound or heteroaromatic compound, or can be substituted by further C₆-C₂₄ aromatic compounds via a unit Q, which has the meaning given in the formulae (IV) and (V), and
d) alkali sulphides, preferred sodium sulphide or potassium sulphide or mixtures thereof, together with alkali hydrogen sulphides, preferred sodium hydrogen sulphide or potassium hydrogen sulphide or mixtures thereof, optionally in the form of their hydrates or of aqueous mixtures, optionally together with catalysts or other auxiliary substances in
e) a polar, aprotic, organic solvent,
are reacted together at a temperature of 180-350°C, optionally at a pressure of up to 10³ bar, whereby the addition of the dihaloaliphatic compound(s) does not take place until after complete dehydration of the reaction system.

3. Use of the sulphur-containing copolymer according to claim 1, optionally combined with conventional fillers, reinforcing agents and auxiliary substances and/or other polymers for the preparation of moulded bodies.

## Revendications

1. Copolymères soufrés statistiques ou alternés, éventuellement ramifiés, contenant
a) 60 à 99,5 % en moles d'unités de sulfure d'arylène identiques ou différentes de formule (I)
-Ar-S- (I)
dans laquelle
Ar représente un reste ayant les formules (II) à (IV) 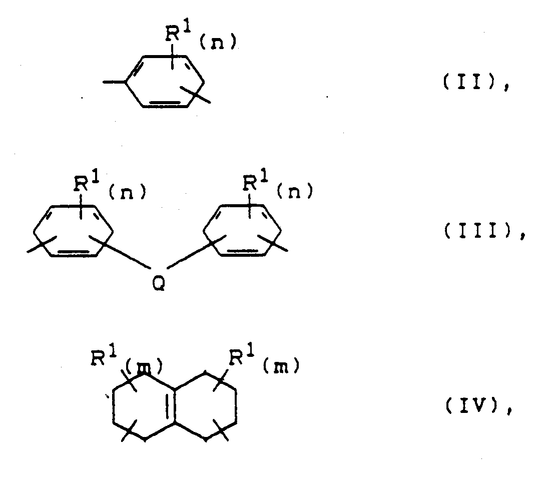 dans lesquelles
les R¹ sont identiques ou différents et peuvent être l'hydrogène ou des restes alkyle en C₁-C₄, cycloalkyle en C₅-C₁₀, aryle en C₆-C₁₀, alkylaryle en C₇-C₁₄, arylalkyle en C₇-C₁₄, des restes R¹ en position ortho l'un par rapport à l'autre pouvant être reliés pour former avec les atomes de carbone cycliques adjacents un noyau en C₅-C₁₄ aromatique ou hétérocyclique contenant jusqu'à 3 hétéroatomes tels que N, O, S, et
Q représente une liaison simple ou un groupe tel que -CR¹₂-, -C(O)-, -S(O)-, -S(O)₂-, NR¹-, -C(O)O-, -C(O)NR¹-, (-C(O))₂N-, -C(O)NR¹-Ar-NR¹C(O)- et -C(O)-Ar-C(O)-, R¹ et Ar ayant la signification donnée ci-dessus, et
n représente le nombre 1, 2, 3 ou 4,
m représente le nombre 1, 2 ou 3, et
b) 0,5 à 40 % en moles, de préférence 1 à 25 % en moles, d'unités identiques ou différentes de sulfure d'alkylène en C₁-C_{∞} éventuellement ramifié, de préférence d'unités de sulfure d'alkylène en C₂-C_{∞}, de façon particulièrement préférée d'unités de sulfure d'alkylène en C₆-C₃₆.

2. Procédé de préparation de copolymères soufrés statistiques ou alternés selon la revendication 1, caractérisé en ce que l'on fait réagir ensemble, à une température de 180 à 350°C, éventuellement sous une pression allant jusqu'à 10³ bars,
a) 60 à 99,5 % en moles, de préférence 75 à 99 % en moles, par rapport à la somme de a) et b), de composés (hétéro)aromatiques dihalogénés identiques ou différents, de préférence de composés aromatiques dihalogénés ayant les formules (V), (VI), et/ou (VII) 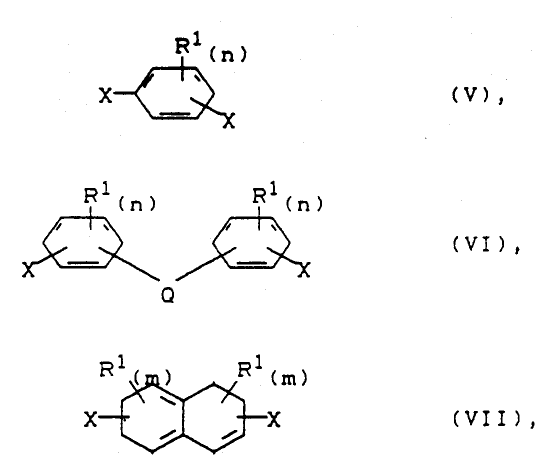 dans lesquelles
X représente un halogène comme le chlore ou le brome,
les R¹ sont identiques ou différents et peuvent être l'hydrogène ou des restes alkyle en C₁-C₄, cycloalkyle en C₅-C₁₀, aryle en C₆-C₁₀, alkylaryle en C₇-C₁₄, arylalkyle en C₇-C₁₄, deux restes R¹ en position ortho l'un par rapport à l'autre pouvant être reliés pour former avec les atomes de carbone cycliques adjacents un noyau en C₅-C₁₄ aromatique ou hétérocyclique contenant jusqu'à 3 hétéroatomes tels que N, O, S, et
Q représente une liaison simple ou un groupe tel que -CR¹₂-, -C(O)-, -S(O)-, -SO₂-, NR¹-, -C(O)O-, -C(O)NR¹-, (-C(O))₂N-, -C(O)NR¹-C(O)- et -C(O)-Ar-C(O)-, R¹ ayant la signification donnée ci-dessus, et
n représente le nombre 1, 2, 3 ou 4,
m représente le nombre 1, 2 ou 3, et
b) 0,5 à 40 % en moles, de préférence 1 à 25 % en moles, par rapport à la somme de a) et b), de composés aliphatiques dihalogénés éventuellement ramifiés identiques ou différents en C₁-C_{∞}, de préférence de composés aliphatiques dihalogénés en C₂-C_{∞}, de façon particulièrement préférée de composés aliphatiques dihalogénés en C₆-C₃₆,
c) éventuellement 0,05 à 3 % en moles par rapport à la somme a+b de composés aromatiques tri- ou tétrahalogénés de formule (VIII)
ArXₙ (VIII)
dans laquelle
X représente un halogène comme le chlore ou le brome,
Ar représente un composé aromatique ou hétéroaromatique en C₆-C₂₄ et
n représente le nombre 3 ou 4,
et/ou
éventuellement 0,05 à 7,5 % en moles par rapport à la somme a+b de composés destinés à la régulation de la masse moléculaire, de préférence de composés aromatiques monohalogénés ou monohydroxylés de formule (IX)
Ar¹-Y (IX)
dans laquelle
Y représente un reste hydroxy, alcoxy ou halogène comme le chlore ou le brome, et
Ar¹ représente un composé aromatique ou hétéroaromatique en C₆-C₂₄, ou peut être substitué, par l'intermédiaire d'une unité Q ayant la signification donnée pour les formules (IV) et (V), par d'autres composés aromatiques en C₆-C₂₄, et
d) des sulfures alcalins, de préférence du sulfure de sodium ou de potassium ou un de leurs mélanges, avec des hydrogénosulfures alcalins, de préférence l'hydrogénosulfure de sodium ou de potassium ou un de leurs mélanges, éventuellement sous forme de leurs hydrates ou de mélanges aqueux, éventuellement avec des catalyseurs ou d'autres produits auxiliaires, dans
d) un solvant organique aprotique polaire,
l'addition du ou des composés aliphatiques dihalogénés ne s'effectuant qu'après la fin de l'élimination complète de l'eau du système réactionnel.

3. Utilisation des copolymères soufrés selon la revendication 1, éventuellement en combinaison avec des charges, des produits renforçants et des additifs classiques et/ou d'autres polymères, pour la production de corps moulés.
